# EUROPEAN PATENT SPECIFICATION

(11) **EP 3 678 270 B1**
(45) Date of publication and mention of the grant of the patent: **08.11.2023**
(21) Application number: 17922932.3
(22) Date of filing: 01.09.2017
(51) Int. Cl.: H02H 7/045, H02H 1/04, H02H 3/08

(54) **DIGITAL PROTECTION RELAY AND THRESHOLD LEARNING METHOD OF DIGITAL PROTECTION RELAY**
DIGITALES SCHUTZRELAIS UND SCHWELLENLERNVERFAHREN FÜR DIGITALES SCHUTZRELAIS
RELAIS DE PROTECTION NUMÉRIQUE ET PROCÉDÉ D'APPRENTISSAGE DE SEUIL DE RELAIS DE PROTECTION NUMÉRIQUE

(43) Date of publication of application: 08.07.2020
(73) Proprietor: Mitsubishi Electric Corporation, Chiyoda-ku Tokyo 100-8310 (JP)
(72) Inventor: MIYAUCHI, Toshihiko, Tokyo 100-8310 (JP)
(74) Representative: Witte, Weller & Partner Patentanwälte mbB
(86) International application number: PCT/JP2017/031600
(87) International publication number: WO 2019/043910

(56) References cited:
- EP-A1- 3 091 628
- JP-A- H10 327 530
- JP-A- H11 252 783
- JP-A- 2009 148 018
- JP-A- 2011 020 548
- JP-A- 2016 144 297

## Description

### TECHNICAL FIELD

The present invention relates to a digital protection relay used for protecting, for example, a transformer in a power system, and a threshold learning method of a digital protection relay.

### BACKGROUND ART

In a conventional digital protection relay, in order to discriminate between excitation inrush current that flows when a transformer or the like is connected to a system, and failure current when the system has failed, a second harmonic component contained in an input signal is detected, and when the ratio thereof to a fundamental wave component exceeds a threshold, the current is determined to be excitation inrush current, and accordingly, an overcurrent protection operation of the relay for coping with failure current is not performed (see, for example, Patent Document 1).

### CITATION LIST

### PATENT DOCUMENTS

Patent Document 1: Japanese Laid-Open Patent Publication No. 58-154320
Patent document 2: US2016327600A1
Patent document 3: JPH11252783A
Patent document 4: JPH10327530A

### SUMMARY OF THE INVENTION

### PROBLEMS TO BE SOLVED BY THE INVENTION

However, harmonic components contained in excitation inrush current differ among transformers. Therefore, if the threshold is set to one specific value, there is a possibility that erroneous operation occurs when the transformer is connected.

Setting of the threshold for the second harmonic content rate is performed by a user. However, the second harmonic content rate differs among transformers, and it is difficult to calculate the second harmonic content rate. Therefore, in practice, the threshold is set on the basis of the past experiences. The set value based on such a way of setting is low in appropriateness. In the case where a margin for the threshold is small, depending on variations in aged deteriorations, load conditions, and environmental conditions (in particular, temperature changes) of transformers, erroneous operation of an overcurrent protection function occurs at the time of turning on the transformer.

The present invention has been made to solve the above problem, and an object of the present invention is to obtain a digital protection relay that has a learning function for learning excitation inrush current when a transformer is connected and setting a threshold, and that has high reliability so that erroneous operation does not occur.

### SOLUTION TO THE PROBLEMS

Therefore, there is provided a digital protection relay and a threshold learning method according to the independent claims.

### EFFECT OF THE INVENTION

In the digital protection relay according to the present invention, the threshold learning unit updates the threshold for the harmonic on the basis of excitation inrush current that occurs when the transformer is connected. Thus, it is possible to reliably prevent erroneous operation due to excitation inrush current which differs among transformers.

### BRIEF DESCRIPTION OF THE DRAWINGS

[FIG. 1] FIG. 1 is a circuit configuration diagram in which a digital protection relay according to embodiment 1 of the present invention is applied to a power transformer.
[FIG. 2] FIG. 2 is a function block diagram of the digital protection relay according to embodiment 1 of the present invention.
[FIG. 3] FIG. 3 is a hardware configuration diagram of the digital protection relay according to embodiment 1 of the present invention.
[FIG. 4] FIG. 4 is a flowchart showing the procedure of learning for a threshold in the digital protection relay according to embodiment 1 of the present invention.
[FIG. 5] FIG. 5 is a waveform diagram of excitation inrush current flowing through the digital protection relay according to embodiment 1 of the present invention.
[FIG. 6] FIG. 6 is a conceptual view of a display operation portion of the digital protection relay according to embodiment 1 of the present invention.
[FIG. 7] FIG. 7 is a flowchart showing the procedure of learning for a threshold in a digital protection relay according to embodiment 2 of the present invention.

### DESCRIPTION OF EMBODIMENTS

### Embodiment 1

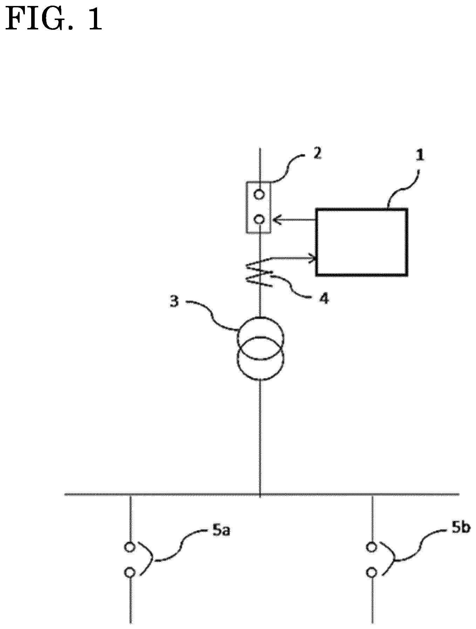

FIG. 1 is a circuit configuration diagram in the case where a digital protection relay 1 according to embodiment 1 of the present invention is applied to a power transformer 3 (hereinafter, referred to as transformer). The transformer 3 which is a protection target is connected to a power system power supply (not shown) via a circuit breaker (CB) 2. In addition, a main current transformer (CT) 4 for extracting AC current for each phase is provided. The low-voltage side of the transformer 3 is connected to loads (not shown) via no-fuse circuit breakers (molded case circuit breakers, MCCB) 5a, 5b. AC current extracted by the main current transformer 4 is introduced to the digital protection relay 1, and for protection from overcurrent (failure current) caused by a system failure or the like, an interruption operation of the circuit breaker 2 is performed, thereby protecting the transformer 3.

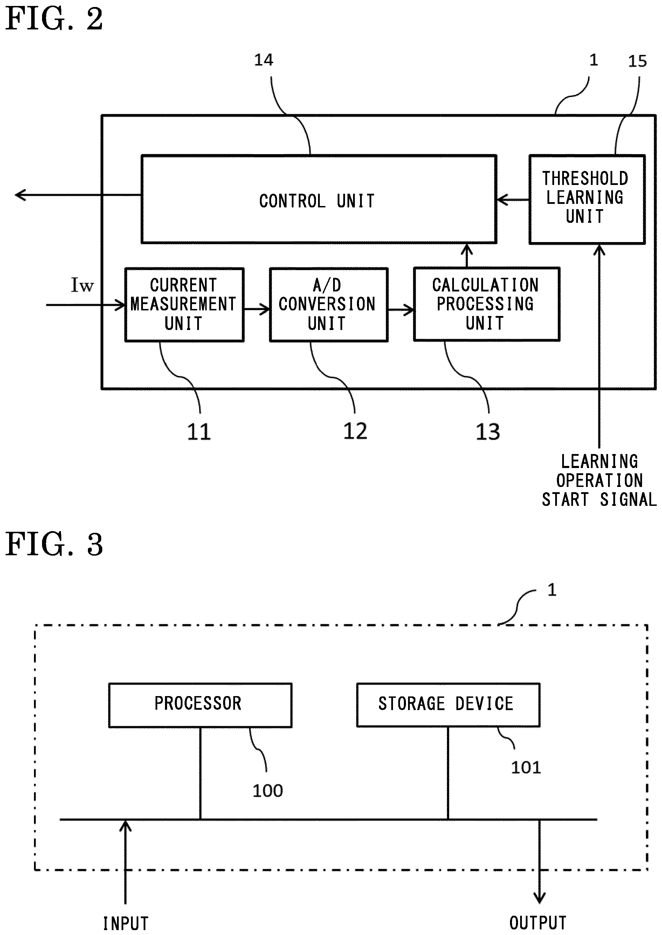

FIG. 2 is a function block diagram of the digital protection relay 1 according to embodiment 1 of the present invention. In FIG. 2, AC current Iw extracted by the main current transformer 4 is converted to an appropriate magnitude by a current measurement unit 11. An A/D conversion unit 12 samples the AC current converted by the current measurement unit 11 at regular time intervals (in general, high-speed sampling at 4.8 kHz with a rated frequency of 50 kHz), and converts the sampled value to digital data. The digital data is inputted to the calculation processing unit 13, in which frequency analysis is performed through digital calculation such as fast Fourier transform (FFT) or digital addition/subtraction processing. As a result of the frequency analysis, if the ratio of a second harmonic to a fundamental wave component of the current is equal to or greater than a threshold, a control unit 14 determines the current to be excitation inrush current, and locks an interruption operation of the circuit breaker 2. A threshold learning unit 15 performs a series of steps for learning from occurrence of excitation inrush current to threshold calculation.

FIG. 3 is a configuration diagram showing an example of hardware of the digital protection relay 1 according to embodiment 1 of the present invention. The current measurement unit is formed from an analog circuit, and the A/D conversion unit 12, the calculation processing unit 13, and the control unit 14 are formed from at least a processor 100 and a storage device 101. Although not shown, the storage device 101 includes a volatile storage device such as a random access memory, and a nonvolatile auxiliary storage device such as a flash memory. Instead of a flash memory, an auxiliary storage device of a hard disk may be provided. The processor 100 executes a program inputted from the storage device 101, to perform sampling, frequency analysis by FFT, and the like. In this case, the program is inputted from the auxiliary storage device to the processor 100 via the volatile storage device. The processor 100 may output data such as a calculation result to the volatile storage device of the storage device 101, or may store the data into the auxiliary storage device via the volatile storage device. The threshold learning function described later may also be stored as a program in the storage device 101 and may be executed by the processor 100. Depending on the circuit configuration, the processor may be partially combined with an ASIC.

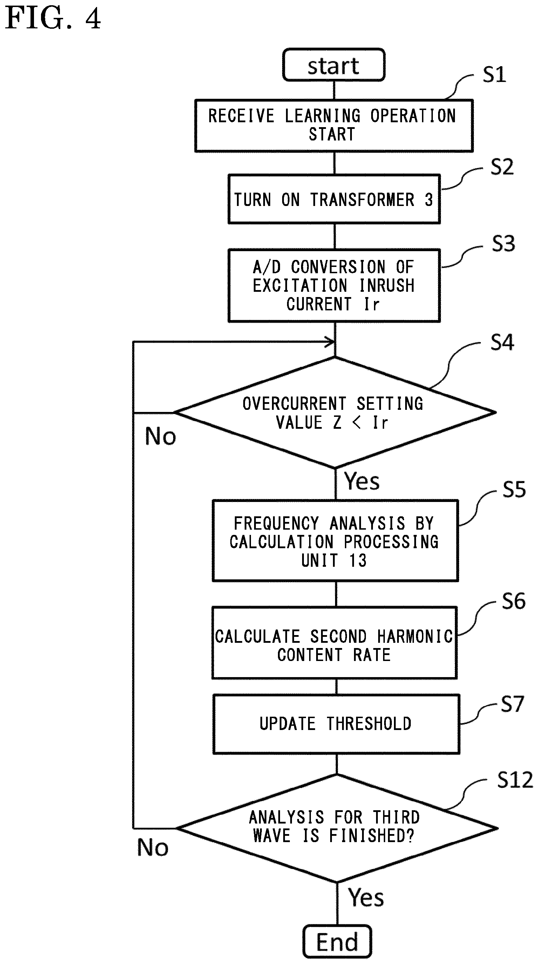

Next, a learning function for updating a threshold for the second harmonic content rate, which is executed by the threshold learning unit 15 of the digital protection relay according to embodiment 1 of the present invention, will be described. When the digital protection relay 1 is installed, a threshold that is a second harmonic content rate of 15%, which is generally used on the basis of the past experiences, is stored as an initial value in the control unit 14. In order to match the threshold stored as the initial value with the characteristics of the transformer 3, the conditions of connected loads, or the environmental conditions such as temperature, the learning function for updating the threshold is executed by the threshold learning unit 15 through the procedure shown in the flowchart in FIG. 4, to update the threshold (hereinafter, this operation is referred to as learning operation).

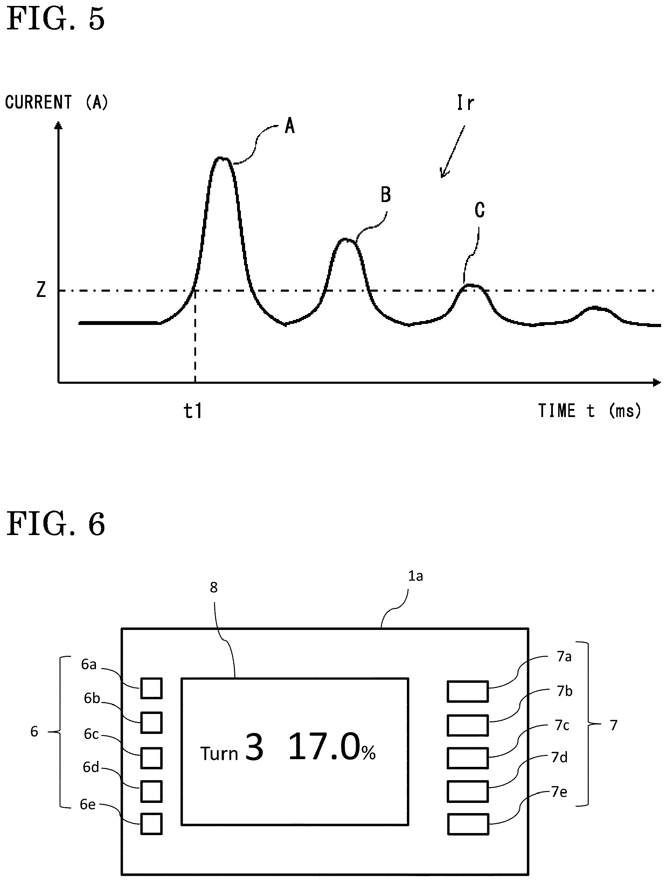

First, a signal for starting the learning operation is inputted from outside to the threshold learning unit 15 (step S1). Next, the control unit 14 is commanded to output a circuit breaker turn-on signal to the circuit breaker 2, and the circuit breaker 2 is turned on, whereby the transformer is connected to the system (hereinafter, this operation is referred to as turning on the transformer) (step S2). Thus, excitation inrush current Ir as shown in FIG. 5 flows to the digital protection relay 1. The excitation inrush current Ir is converted to a digital value by the A/D conversion unit 12 (step S3), and from a time t1 when current greater than an overcurrent setting value Z (step S4) is inputted, calculation of the second harmonic content rate is started (steps S5, S6). Detection for the current input time t1 is performed by the current measurement unit 11 or the calculation processing unit 13. Standardly, first to third waves (in FIG. 5, referred to as first wave A, second wave B, and third wave C) are extracted as data for updating the threshold. However, if the excitation inrush current becomes small so that, for example, the second wave B and the third wave C become equal to or smaller than the overcurrent setting value Z, these waves are not included in the data for updating the threshold. The digital data of the first wave A, the second wave B, and the third wave C that have been extracted is subjected to frequency analysis by the calculation processing unit 13, to calculate the second harmonic content rate for each wave. A value obtained by multiplying the sum of the calculated second harmonic content rates for the respective waves by 0.5 is used as a threshold based on first-time learning, thus updating the initial value (step S7). The excitation inrush current varies depending on the number of connected loads or the temperature. Therefore, a margin of about ±5% may be taken into consideration. When analysis for the third wave has been finished (step S12) and thus the learning operation has been finished, operation as a relay for performing an interruption operation when failure current has occurred is to be performed as described above.

The number of times the learning operation is performed may be one. However, performing the learning operation plural times improves accuracy of determination for excitation inrush current. Therefore, in the operation test at the time of installation, turning-on for the transformer 3 may be performed plural times to generate a plurality of excitation inrush currents and calculate the threshold. In such a case where the load has been stopped for a long period, the circuit breaker 2 is turned off to disconnect the load from the power system, and after the stop period is ended, the transformer 3 is turned on again. At this time, the learning operation may be performed, whereby the threshold can be calculated from excitation inrush current in accordance with aged deterioration of the transformer. In the case of performing the learning operation plural times, an average value µ and a standard deviation σ of a plurality of second harmonic content rates are calculated, and a value shifted toward the lower limit side by 3σ from the average value µ so as to include 99.7% of variations, or a value shifted toward the lower limit side by 4σ from the average value µ for the purpose of strengthening prevention of erroneous operation, is used as the threshold to be updated. However, in the case where, due to the influence of the connected load, the excitation inrush current is equal to or greater than the overcurrent setting value but the current value is small and the second harmonic content rate is also small, e.g., 10% or less, if a value shifted by 3o or 4σ from the average value µ is used as the threshold, this might pose an obstacle to the interruption operation at the time of overcurrent. Therefore, a value shifted toward the lower limit side by 2o from the average value µ may be set as the threshold. In addition, in the case where a plurality of transformers are provided, the learning operation can be performed for each transformer, and the respective thresholds therefor can be set in the digital protection relay.

FIG. 6 is a conceptual view of a display operation portion 1a of the digital protection relay 1 according to embodiment 1 of the present invention. Display lamps 6 indicate operations states by lighting up or blinking lamps. A circuit breaker ON lamp 6a is lit up when the circuit breaker 2 is turned on. A circuit breaker OFF lamp 6b is lit up when the circuit breaker 2 is opened. An overcurrent protection function operation lamp 6c is blinked when the circuit breaker 2 is opened due to the protection operation upon occurrence of failure current. A system abnormality lamp 6d is lit up when abnormality has occurred in the digital protection relay 1. A learning operation lamp 6e is blinked during the learning operation period for updating the threshold. Switches 7 are used for turning ON/OFF device operations. A switch 7a is for performing a turn-on operation of the circuit breaker 2. A switch 7b is for performing an opening operation of the circuit breaker. A switch 7c is a remote switch for performing remote control. A switch 7d is a reset switch for resetting the abnormality state of the digital protection relay. A switch 7e is a learning operation start switch for starting the threshold learning operation.

By turning ON the switch 7e or by bringing the switch 7e into an ON state through remote control, the threshold learning operation described in FIG. 3 is started. At this time, the learning operation lamp 6e is blinked, whereby an operator can easily and visually recognize the start of the learning operation. When the switch 7a is manually turned on while the learning operation is started, or when the circuit breaker 2 is automatically turned on along with the start of the learning operation, the circuit breaker ON lamp 6a is lit up. When the learning operation is finished, the learning operation lamp 6e is extinguished, but the circuit breaker ON lamp 6a remains lit up, whereby an operator can visually recognize that operation as a relay has been started. When the learning operation is finished, the number of times the learning operation has been performed and the updated threshold are displayed on a liquid crystal display portion 8.

As described above, the digital protection relay according to embodiment 1 of the present invention updates the threshold for the second harmonic of excitation inrush current at the time of turning on the transformer, through the learning operation by the threshold learning unit. Therefore, it is possible to change the threshold in accordance with excitation inrush current which differs among transformers, and it is possible to update the threshold so as to follow change in excitation inrush current due to aged deterioration of the transformer, the connected-load conditions, the environmental conditions, or the like, thereby reliably preventing erroneous operation due to excitation inrush current.

### Embodiment 2

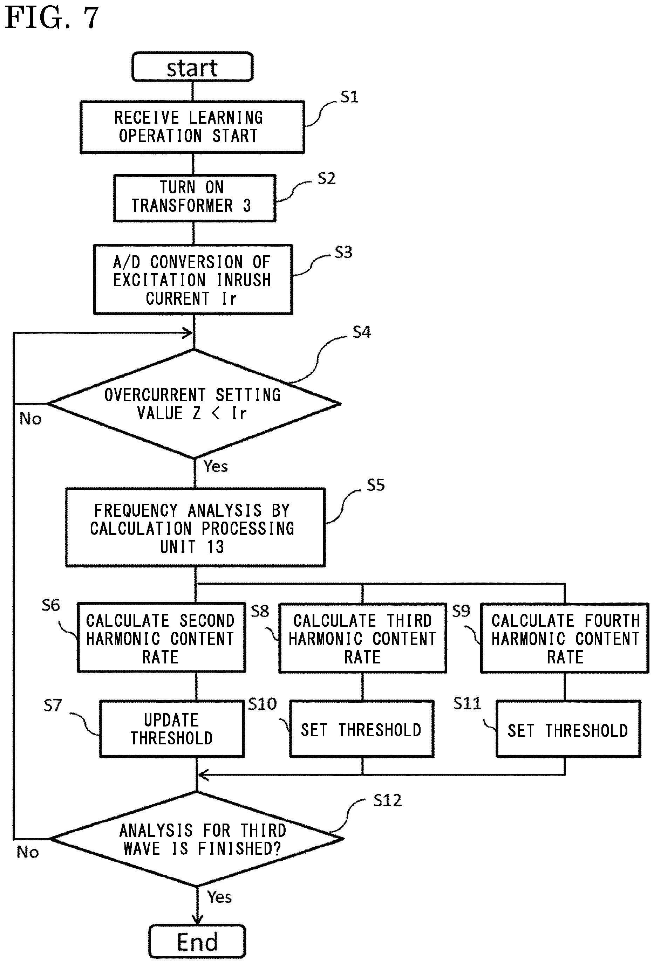

In the digital protection relay according to embodiment 1, the threshold is calculated from the second harmonic content rate in the excitation inrush current Ir. However, since FFT is used in the calculation processing unit 13, it is easy to extract not only the second harmonic but also a higher-order harmonic and calculate the content rate therefor. FIG. 7 is a flowchart of a first-time learning operation executed by the threshold learning unit 15 for updating thresholds for harmonics including a harmonic of higher order than the second harmonic. In FIG. 7, the same reference characters as those in FIG. 4 denote the same or corresponding operations, and therefore the description thereof is omitted. Through frequency analysis by the calculation processing unit 13, a third harmonic and a fourth harmonic are extracted (step S5), and as in the second harmonic, a third harmonic content rate and a fourth harmonic content rate of each of a first wave A, a second wave B, and a third wave C (see FIG. 5) with respect to a fundamental wave component of the current are calculated (steps S8, S9). Then, values obtained by multiplying each of the sum of the third harmonic content rates and the sum of the fourth content rates by 0.5 are set as the thresholds based on first-time learning (steps S10, S11). It is noted that initial values of the thresholds for the third harmonic content rate and the fourth harmonic content rate are not set, and at a stage before the first-time learning operation, determination for excitation inrush current is performed on the basis of only the initial value of the second harmonic content rate. The procedure for performing the learning operation plural times to update the threshold is the same as that described in embodiment 1.

Determination for excitation inrush current using the thresholds for the second harmonic content rate, the third harmonic content rate, and the fourth harmonic content rate is performed by the control unit 14, and the current may be determined to be excitation inrush current when each harmonic content rate is equal to or greater than the threshold. In this case, the determination may be performed with priorities set for the thresholds, or may be performed with the thresholds weighted. An example of determination based on priorities is as follows. In the case where the second harmonic content rate of AC current introduced into the digital protection relay 1 is smaller than the threshold but within a margin of -5%, the current may be determined to be excitation inrush current when the third harmonic content rate and the fourth harmonic content rate are equal to or greater than the respective thresholds. An example of determination based on weighting is as follows. The threshold for the second harmonic content rate is set to a value shifted toward a lower limit side by 4σ from the average value µ, whereby the range of excitation inrush current determination is broadened so as to roughly perform the determination, and the threshold for the third harmonic content rate and the threshold for the fourth harmonic content rate are set to values shifted by 3σ from the average values, whereby the thresholds are set to be higher so as to finely perform the determination. Then, when all these threshold conditions are satisfied, the current may be determined to be excitation inrush current. It is noted that harmonics to be combined with the second harmonic are not limited to the third and fourth harmonics, but may be combined with harmonics of higher orders or may be combined with a DC component. In the case of performing excitation inrush current determination using such a combination, setting of priorities or weighting is made for the combination in order to improve determination accuracy.

### As described above, in the digital protection relay according to embodiment 2 of the present invention, in addition to the threshold for the second harmonic content rate, thresholds are set for other harmonics or a DC component, and the determination is performed on the basis of a combination of these. Thus, it is possible to perform determination in accordance with the characteristics of excitation inrush current of each transformer, whereby determination accuracy is further improved and erroneous operation is prevented.

In embodiment 1 and embodiment 2 of the present invention, the threshold learning unit 15 and the control unit 14 have been described as separate units. However, the threshold learning unit 15 may be provided in the control unit 14. In addition, the A/D conversion unit 12, the calculation processing unit 13, the control unit 14, and the threshold learning unit may be executed as a program by the processor.

It is noted that, within the scope of the present invention as defined by the appended claims, the above embodiments may be freely combined with each other, or each of the above embodiments may be modified or simplified as appropriate.

### DESCRIPTION OF THE REFERENCE CHARACTERS

- 1: digital protection relay
- 2: circuit breaker
- 3: transformer
- 11: current measurement unit
- 12: A/D conversion unit
- 13: calculation processing unit
- 14: control unit
- 15: threshold learning unit

## Claims

1. A digital protection relay to which AC current flowing through a transformer (3) is inputted and which performs an interruption operation of a circuit breaker (2) connected to the transformer (3) when overcurrent is detected, the digital protection relay comprising:
an A/D conversion unit (12) configured to sample the inputted AC current at regular intervals;
a calculation processing unit (13) configured to perform frequency analysis by Fourier transform on the basis of a digital value sampled by the A/D conversion unit; and
a control unit (14) configured to inhibit the interruption operation of the circuit breaker (2) when a proportion of a harmonic extracted by the calculation processing unit (13) is equal to or greater than a threshold set on the basis of a proportion of a harmonic contained in excitation inrush current, **characterized by**:
a threshold learning unit (15) configured to, perform a learning operation for updating the threshold, wherein after a signal for starting the learning operation is input to the threshold learning unit (15),
the control unit (14) is commanded to turn the circuit breaker (2) on,
of at least three waves of excitation inrush current occurring when the transformer (3) is connected, a wave having a predetermined current value or higher is subjected to the frequency analysis by the calculation processing unit (13) to calculate a harmonic content rate for each wave,
the threshold is updated on the basis of the harmonic content rates obtained by the frequency analysis.

2. The digital protection relay according to claim 1, wherein
the circuit breaker (2) is turned on plural times in the learning operation, and the threshold is updated on the basis of an average value and a standard deviation of a plurality of extracted harmonic content rates, wherein a value shifted toward the lower limit side by two, three or four times the standard deviation from the average value is used to update the threshold.

3. The digital protection relay according to claim 1 or 2, wherein
a learning operation lamp (6e) is blinked when the learning operation is started, a circuit breaker operation lamp (6a) is lit up when the circuit breaker (2) is turned on, and only the learning operation lamp (6e) is extinguished when the learning operation is finished.

4. The digital protection relay according to any one of claims 1 to 3, wherein
the harmonic content rate for calculating the update value for the threshold is a content rate of a second harmonic.

5. The digital protection relay according to any one of claims 1 to 3, wherein
the harmonic content rate for calculating the update value for the threshold comprises content rates of a second harmonic, a third harmonic, and a fourth harmonic.

6. A threshold learning method of a digital protection relay, the method comprising:
turning on a circuit breaker (2) when a threshold learning operation is started;
converting excitation inrush current flowing through a transformer (3), to a digital value, wherein of at least three waves of excitation inrush current occurring when the transformer (3) is connected, a wave having a predetermined current value or higher is subjected to frequency analysis by Fourier transform to calculate a harmonic content rate for each wave;
calculating a threshold on the basis of the harmonic content rates;
updating an existing threshold by the calculated threshold; and
determining that AC current having a harmonic content rate equal to or greater than the updated threshold is excitation inrush current.

7. The threshold learning method according to claim 6, wherein
the circuit breaker (2) is turned on plural times in the learning operation, and the threshold is updated on the basis of an average value and a standard deviation of a plurality of extracted harmonic content rates, wherein a value shifted toward the lower limit side by two, three or four times the standard deviation from the average value is used to update the threshold.

8. The threshold learning method according to claim 6 or 7, wherein
a learning operation lamp (6e) is blinked when the learning operation is started, a circuit breaker operation lamp (6a) is lit up when the circuit breaker (2) is turned on, and only the learning operation lamp (6e) is extinguished when the learning operation is finished.

9. The threshold learning method according to any one of claims 6 to 8, wherein
the harmonic content rate for calculating the update value for the threshold is a content rate of a second harmonic.

10. The threshold learning method according to any of claims 6 to 8, wherein
the harmonic content rate for calculating the update value for the threshold comprises content rates of a second harmonic, a third harmonic, and a fourth harmonic.

11. The threshold learning method according to claim 10, wherein
in determination for excitation inrush current, setting priorities for the set thresholds for the second, third, and fourth harmonics, or weighting each of the thresholds, to perform determination for excitation inrush current.

## Patentansprüche

1. Digitales Schutzrelais, in welches ein AC-Strom, der durch einen Transformator (3) fließt, eingegeben wird und das einen Unterbrechungsbetrieb eines Leistungsschalters (2), der mit dem Transformator (3) verbunden ist, durchführt, wenn ein Überstrom erfasst wird, wobei das digitale Schutzrelais aufweist:
eine A/D-Umwandlungseinheit (12), die eingerichtet ist, den eingegebenen AC-Strom in regelmäßigen Intervallen abzutasten;
eine Berechnungsverarbeitungseinheit (13), die eingerichtet ist, eine Frequenzanalyse durch eine Fourier-Transformation basierend auf einem digitalen Wert durchzuführen, der durch die AD-Umwandlungseinheit abgetastet ist; und
eine Steuereinheit (14), die eingerichtet ist, den Unterbrechungsbetrieb des Leistungsschalters (2) zu verhindern, wenn ein Anteil einer Harmonischen, die durch die Berechnungsverarbeitungseinheit (13) extrahiert wird, größer oder gleich einer Schwelle ist, die basierend auf einem Anteil einer Harmonischen eingestellt ist, die in einem Erregereinschaltstrom enthalten ist, **gekennzeichnet durch**:
eine Schwellenlerneinheit (15), die eingerichtet ist, einen Lernbetrieb zum Aktualisieren der Schwelle durchzuführen, wobei, nachdem ein Signal zum Beginnen des Lernbetriebs in die Schwellenlerneinheit (15) eingegeben ist,
wobei die Steuereinheit (14) einen Befehl erhält, um den Leistungsschalter (2) einzuschalten,
wobei von zumindest drei Wellen eines Erregereinschaltstroms, der auftritt, wenn der Transformator (3) verbunden ist, eine Welle mit einem vorbestimmten Stromwert oder höher der Frequenzanalyse durch die Berechnungsverarbeitungseinheit (13) unterzogen wird, um eine Inhaltsquote einer Harmonischen für jede Welle zu berechnen,
wobei die Schwelle basierend auf den harmonischen Inhaltsquoten aktualisiert wird, die durch die Frequenzanalyse erhalten werden.

2. Digitales Schutzrelais nach Anspruch 1, wobei
der Leistungsschalter (2) im Lernbetrieb mehrere Male eingeschaltet wird und die Schwelle basierend auf einem Mittelwert und einer Standardabweichung einer Vielzahl von extrahierten harmonischen Inhaltsquoten aktualisiert wird, wobei ein Wert, der in Richtung der unteren Grenzseite um zwei-, drei- oder viermal die Standardabweichung gegenüber dem Mittelwert versetzt ist, zum Aktualisieren der Schwelle verwendet wird.

3. Digitales Schutzrelais nach Anspruch 1 oder 2, wobei
eine Lernbetriebslampe (6e) blinkt, wenn der Lernbetrieb gestartet wird, eine Leistungsschalter-Betriebslampe (6a) erleuchtet wird, wenn der Leistungsschalter (2) eingeschaltet wird, und lediglich die Lernbetriebslampe (6e) ausgeschaltet wird, wenn der Lernbetrieb beendet ist.

4. Digitales Schutzrelais nach einem der Ansprüche 1 bis 3, wobei
die harmonische Inhaltsquote zum Berechnen des aktualisierten Werts für die Schwelle eine Inhaltsquote einer zweiten Harmonischen ist.

5. Digitales Schutzrelais nach einem der Ansprüche 1 bis 3, wobei
die harmonische Inhaltsquote zum Berechnen des aktualisierten Werts für die Schwelle Inhaltsquoten für eine zweite Harmonische, eine dritte Harmonische und eine vierte Harmonische aufweisen.

6. Schwellenlernverfahren eines digitalen Schutzrelais, wobei das Verfahren aufweist:
Einschalten eines Leistungsschalters (2), wenn ein Schwellenlernbetrieb begonnen wird;
Umwandeln eines Erregereinschaltstroms, der durch einen Transformator (3) fließt, in einen digitalen Wert, wobei von zumindest drei Wellen eines Erregereinschaltstroms, der auftritt, wenn der Transformator (3) verbunden ist, eine Welle mit einem vorbestimmten Stromwert oder höher einer Frequenzanalyse durch eine Fourier-Transformation unterzogen wird, um eine Inhaltsquote einer Harmonischen für jede Welle zu berechnen;
Berechnen einer Schwelle basierend auf den harmonischen Inhaltsquoten;
Aktualisieren einer existierenden Schwelle mittels der berechneten Schwelle; und
Bestimmen, dass ein AC-Strom, der eine harmonische Inhaltsquote größer oder gleich der aktualisierten Schwelle aufweist, ein Erregereinschaltstrom ist.

7. Schwellenlernverfahren nach Anspruch 6, wobei
der Leistungsschalter (2) mehrere Male während des Lernbetriebs eingeschaltet wird und die Schwelle basierend auf einem Mittelwert und einer Standardabweichung einer Vielzahl von extrahierten harmonischen Inhaltsquoten aktualisiert wird, wobei ein Wert, der in Richtung der unteren Grenzseite um zwei-, drei- oder viermal die Standardabweichung gegenüber dem Mittelwert versetzt ist, zum Aktualisieren der Schwelle verwendet wird.

8. Schwellenlernverfahren nach Anspruch 6 oder 7, wobei
eine Lernbetriebslampe (6e) blinkt, wenn der Lernbetrieb begonnen wird, eine Leistungsschalter-Betriebslampe (6a) erleuchtet wird, wenn der Leistungsschalter (2) eingeschaltet wird, und lediglich die Lernbetriebslampe (6e) ausgeschaltet wird, wenn der Lernbetrieb beendet ist.

9. Schwellenlernverfahren nach einem der Ansprüche 6 bis 8, wobei
die harmonische Inhaltsquote zum Berechnen des aktualisierten Werts für die Schwelle eine Inhaltsquote für eine zweite Harmonische ist.

10. Schwellenlernverfahren nach einem der Ansprüche 6 bis 8, wobei
die harmonische Inhaltsquote zum Berechnen des aktualisierten Werts für die Schwelle Inhaltsquoten einer zweiten Harmonischen, einer dritten Harmonischen und einer vierten Harmonischen aufweist.

11. Schwellenlernverfahren nach Anspruch 10, wobei
beim Bestimmen eines Erregereinschaltstroms Prioritäten für die eingestellten Schwellen für die zweite, dritte und vierte Harmonische eingestellt werden oder jede der Schwellen gewichtet wird, um eine Bestimmung für einen Erregereinschaltstrom durchzuführen.

## Revendications

1. Relais de protection numérique dans lequel un courant CA circulant à travers un transformateur (3) est entré et qui exécute une opération d'interruption d'un disjoncteur (2) connecté au transformateur (3) lorsqu'une surintensité est détectée, le relais de protection numérique comprenant :
une unité de conversion A/N (12) configurée pour échantillonner le courant CA entré à intervalles réguliers ;
une unité de traitement de calcul (13) configurée pour exécuter une analyse de fréquence par transformation de Fourier sur la base d'une valeur numérique échantillonnée par l'unité de conversion A/N ; et
une unité de commande (14) configurée pour empêcher l'opération d'interruption du disjoncteur (2) lorsqu'une proportion d'une harmonique extraite par l'unité de traitement de calcul (13) est égale ou supérieure à un seuil défini sur la base d'une proportion d'une harmonique contenue dans le courant d'appel d'excitation, **caractérisé par** :
une unité d'apprentissage de seuil (15) configurée pour exécuter une opération d'apprentissage pour mettre à jour le seuil, dans lequel après un signal de démarrage, l'opération d'apprentissage est entrée dans l'unité d'apprentissage de seuil (15),
l'unité de commande (14) est commandée pour allumer le disjoncteur (2),
parmi au moins trois ondes de courant d'appel d'excitation survenant lorsque le transformateur (3) est connecté, une onde ayant une valeur de courant prédéterminée ou supérieure est soumise à l'analyse de fréquence par l'unité de traitement de calcul (13) pour calculer un taux de résidu harmonique pour chaque onde,
le seuil est mis à jour sur la base des taux de résidu harmonique obtenus par l'analyse de fréquence.

2. Relais de protection numérique selon la revendication 1, dans lequel
le disjoncteur (2) est allumé plusieurs fois pendant l'opération d'apprentissage, et le seuil est mis à jour sur la base d'une valeur moyenne et d'un écart-type d'une pluralité de taux de résidu harmonique extraits, dans lequel une valeur décalée vers le côté de limite inférieure de deux, trois ou quatre fois l'écart-type par rapport à la valeur moyenne est utilisée pour mettre à jour le seuil.

3. Relais de protection numérique selon la revendication 1 ou 2, dans lequel
un témoin lumineux d'opération d'apprentissage (6e) clignote lorsque l'opération d'apprentissage démarre, un témoin lumineux d'opération de disjoncteur (6a) est allumé lorsque le disjoncteur (2) est allumé, et seul le témoin lumineux d'opération d'apprentissage (6e) est éteint lorsque l'opération d'apprentissage est terminée.

4. Relais de protection numérique selon l'une quelconque des revendications 1 à 3, dans lequel
le taux de résidu harmonique pour le calcul de la valeur de mise à jour pour le seuil est un taux de résidu d'une seconde harmonique.

5. Relais de protection numérique selon l'une quelconque des revendications 1 à 3, dans lequel
le taux de résidu harmonique pour le calcul de la valeur de mise à jour pour le seuil comprend des taux de résidu d'une deuxième harmonique, d'une troisième harmonique et d'une quatrième harmonique.

6. Procédé d'apprentissage de seuil d'un relais de protection numérique, le procédé comprenant :
l'allumage d'un disjoncteur (2) lorsqu'une opération d'apprentissage de seuil est démarrée ;
la conversion d'un courant d'appel d'excitation circulant à travers un transformateur (3) en une valeur numérique, dans lequel parmi au moins trois ondes de courant d'appel d'excitation survenant lorsque le transformateur (3) est connecté, une onde ayant une valeur de courant prédéterminée ou supérieure est soumise à une analyse de fréquence par l'unité de traitement de calcul pour calculer un taux de résidu harmonique pour chaque onde,
le calcul d'un seuil sur la base des taux de résidu harmonique ;
la mise à jour d'un seuil existant au moyen du seuil calculé ; et
la détermination que le courant CA ayant un taux de résidu harmonique égal ou supérieur au seuil mis à jour est un courant d'appel d'excitation.

7. Procédé d'apprentissage de seuil selon la revendication 6, dans lequel
le disjoncteur (2) est allumé plusieurs fois pendant l'opération d'apprentissage, et le seuil est mis à jour sur la base d'une valeur moyenne et d'un écart-type d'une pluralité de taux de résidu harmonique extraits, dans lequel une valeur décalée vers le côté de limite inférieure de deux, trois ou quatre fois l'écart-type par rapport à la valeur moyenne est utilisée pour mettre à jour le seuil.

8. Procédé d'apprentissage de seuil selon la revendication 6 ou 7, dans lequel
un témoin lumineux d'opération d'apprentissage (6e) clignote lorsque l'opération d'apprentissage démarre, un témoin lumineux d'opération de disjoncteur (6a) est allumé lorsque le disjoncteur (2) est allumé, et seul le témoin lumineux d'opération d'apprentissage (6e) est éteint lorsque l'opération d'apprentissage est terminée.

9. Procédé d'apprentissage de seuil selon l'une quelconque des revendications 6 à 8, dans lequel
le taux de résidu harmonique pour le calcul de la valeur de mise à jour pour le seuil est un taux de résidu d'une seconde harmonique.

10. Procédé d'apprentissage de seuil selon l'une quelconque des revendications 6 à 8, dans lequel
le taux de résidu harmonique pour le calcul de la valeur de mise à jour pour le seuil comprend des taux de résidu d'une deuxième harmonique, d'une troisième harmonique et d'une quatrième harmonique.

11. Procédé d'apprentissage de seuil selon la revendication 10, comprenant
lors de la détermination du courant d'appel d'excitation, la définition de priorités pour les seuils définis pour les deuxième, troisième et quatrième harmoniques, ou la pondération de chacun des seuils, pour exécuter la détermination du courant d'appel d'excitation.
